# EUROPÄISCHE PATENTSCHRIFT

(11) **EP 3 774 175 B1**
(45) Veröffentlichungstag und Bekanntmachung des Hinweises auf die Patenterteilung: **08.12.2021**
(21) Anmeldenummer: 20712933.9
(22) Anmeldetag: 19.03.2020
(51) Int. Cl.: B23Q 17/00, B23B 31/16

(54) **VERFAHREN ZUR BESTIMMUNG DER SPANNKRAFT**
METHOD FOR DETERMINING THE CLAMPING FORCE
PROCÉDÉ DE DÉTERMINATION DE LA FORCE DE SERRAGE

(30) Priorität: 26.03.2019 DE 102019107711
(43) Veröffentlichungstag der Anmeldung: 17.02.2021
(73) Patentinhaber: Röhm GmbH, 89567 Sontheim/Brenz (DE)
(72) Erfinder: STANGL, Martin, 89278 Nersingen (DE)
(74) Vertreter: Hentrich Patentanwälte PartG mbB
(86) Internationale Anmeldenummer: PCT/EP2020/057587
(87) Internationale Veröffentlichungsnummer: WO 2020/193354

(56) Entgegenhaltungen:
- EP-A1- 0 213 218
- DE-A1-102011 081 122
- US-A1- 2011 006 490

## Beschreibung

Die Erfindung ist gebildet durch ein Verfahren zur Bestimmung der Spannkraft einer kraftbetätigten, rotatorisch antreibbaren Spanneinrichtung einer Werkzeugmaschine, umfassend die Schritte
- Einspannen eines Gegenstandes mit einer Betätigungskraft F,
- Modellbasierte Berechnung der anhand der Betätigungskraft F und der Betriebsparameter der Werkzeugmaschine erwartbaren Spannkraft F_{calc} in einer Kontrolleinheit der Werkzeugmaschine,
- getaktete Messung der in der Spanneinrichtung auf den Gegenstand wirkenden Spannkraft Fᵣₑₐₗ im zeitlichen Abstand eines Messintervalls I,
- drahtlose Übertragung des Messwertes Fᵣₑₐₗ an die Kontrolleinheit der Werkzeugmaschine und Vergleich des Messwertes Fᵣₑₐₗ mit der berechneten Spannkraft F_{calc}, und
- Anpassen des Messintervalls, wenn der Vergleich eine Abweichung ergibt, die einen Schwellenwert erreicht.

Für den sicheren Betrieb von Werkzeugmaschinen mit den diesen zugeordneten Spanneinrichtungen ist es erforderlich, die Spannkraft zu kennen, mit der ein Werkstück oder ein Werkzeug in der Spanneinrichtung eingespannt ist. Diese Erkenntnis führte zu der Maschinenrichtlinie 2006/42/EG, durch die für den Betrieb ein bestimmtes Sicherheitsniveau der funktionalen Sicherheit gefordert wird, wobei zum Teil sicherheitsrelevante Signale redundant bereitgestellt werden müssen.

Wünschenswert ist dabei die direkte Messung der Spannkraft der Spanneinrichtung, wobei deren Verwendung in einer Werkzeugmaschine bedeutet, dass die Spanneinrichtung in der Regel durch ein Spannfutter mit Spannbacken gebildet ist, bei der die an den Spannbacken gemessenen Einspannkräfte aus einem rotierenden System an die Werkzeugmaschine übertragen werden müssen. Dazu bietet sich die kabellose Datenübertragung an, was aber bedeutet, dass in dem rotierenden System Energie bereitgestellt werden muss für die Messwerterfassung und die kabellose Übertragung des Messwertes.

In der DE 10 2011 081 122 B4 ist eine Spannvorrichtung beschrieben, die einen Futterkörper mit mindestens einem Spannelement und eine Messeinrichtung zum Erfassen einer von dem Spannelement auf das in der Werkstück-Spanneinrichtung eingespannte Werkstück ausgeübten Spannkraft aufweist, wobei die Messeinrichtung an einer Aufsatzbacke vorgesehen ist, die auch über eine Auswerteeinheit verfügt. Vorhanden ist auch eine Betätigungseinrichtung zum Ausüben einer gewünschten Spannkraft auf ein in der Werkstück-Spanneinrichtung eingespanntes Werkstück. In der Auswerteeinheit erfolgt ein Vergleich der festgelegten erforderlichen Soll-Spannkraft mit der von der Messeinrichtung erfassten Spannkraft.

Der Erfindung liegt die Aufgabe zugrunde, den in der rotatorisch antreibbaren Spanneinrichtung erforderlichen Energiebedarf bei Gewährleistung eines erforderlichen Sicherheitsniveaus zu senken.

Diese Aufgabe wird durch das eingangs geschilderte Verfahren gelöst, das sich dadurch auszeichnet, dass die gegebene Spannkraft auf zwei Wegen bestimmt wird, nämlich zum einen durch die modellbasierte Berechnung, der anhand der Betätigungskraft und der Betriebsparameter der Werkzeugmaschine erwartbaren Spannkraft und die direkte Messung der Spannkraft. Die direkte Messung der Spannkraft erfolgt dabei nicht kontinuierlich, sondern getaktet im zeitlichen Abstand eines Messintervalls. Die Dauer des Messintervalls ist dabei aber nicht konstant vorgegeben, sondern kann zur Energieeinsparung hinsichtlich der Erfassung des Messwertes vergrößert werden, um eine gute Übereinstimmung der berechneten erwartbaren Spannkraft mit der tatsächlich gemessenen Spannkraft zu erhalten. Andererseits kann zur Gewährleistung des erforderlichen Sicherheitsniveaus auch eine Verkürzung des Messintervalls erfolgen, wenn die modellbasierte Berechnung der Spannkraft einen zu großen Wert ergibt und damit einzelne Betriebsparameter unzureichend bestimmt sind und einer Korrektur bedürfen. Derartige Betriebsparameter ergeben sich aus der Kraftübertragungskette mit der Erzeugung der Betätigungskraft, die über eine mechanische Übersetzung in eine Spannkraft umgewandelt wird. Das mechanische Übersetzungsverhältnis ist in erster Linie abhängig von Winkel- oder Hebelverhältnissen des Spannmechanismus. Weitere Betriebsparameter sind die Drehzahl der Spanneinrichtung mit der daraus resultierenden Zentrifugalkraft sowie die Reibkoeffizienten der Funktionsflächen des Übersetzungsmechanismus, die durch tribologische Effekte wie Verschleiß oder dem Schmierzustand beeinflusst werden.

Auf die durch das Verfahren bereitgestellte Weise ist es möglich, die allein die Anforderungen der funktionalen Sicherheit der Maschinenrichtlinie nicht erfüllende kabellose Datenübertragung durch die modellbasierte Berechnung der erwartbaren Spannkraft abzusichern und anhand der Validität der erwartbaren Spannkraft zum optimierten Energieverbrauch das Messintervall anzupassen.

Im Sinne einer verbesserten Sicherheit ist dabei für das Verfahren vorgesehen, dass das Messintervall verlängert wird, wenn der Schwellenwert unterschritten wird und/oder dass das Messintervall verkürzt wird, wenn der Schwellenwert überschritten wird. Damit ist mit einer Optimierung hinsichtlich des Energieverbrauches sichergestellt, dass zur Gewährleistung des erforderlichen Sicherheitslevels die modellbasierte Berechnung der erwartbaren Spannkraft hinreichend genau die tatsächlich gegebene Spannkraft wiedergibt.

Wiederum hinsichtlich einer Gewährleistung eines ausreichenden Sicherheitsniveaus ist vorgesehen, dass die Größe der Änderung des Messintervalls proportional zum Abstand des Messwertes Fᵣₑₐₗ vom Schwellenwert ist, also bei einem großen Abstand vom Schwellenwert eine entsprechend drastische Änderung des Messintervalls erfolgt. Dabei besteht auch die Möglichkeit, dass der Schwellenwert für eine Abweichung mit einem kleineren Fᵣₑₐₗ als F_{calc} kleiner/gleich dem Schwellenwert für eine Abweichung mit einem größeren Fᵣₑₐₗ als F_{calc} ist, also im Hinblick auf das erforderliche Maß an Sicherheit unterschiedliche Schwellenwerte verwendet werden und insbesondere der Fall, dass die tatsächliche Spannkraft kleiner als die kalkulierte Spannkraft ist, genauer überwacht wird, da dies ein größeres Gefährdungspotenzial darstellt.

Berücksichtigt werden kann aber auch, dass die Verformungsempfindlichkeit des einzuspannen Gegenstandes bei der Festlegung des Schwellenwertes für eine Abweichung mit einem größeren Fᵣₑₐₗ als F_{calc} berücksichtigt wird, also verformungsempfindliche Werkstücke, wie zum Beispiel dünnwandige Hülsen, auch davor geschützt werden, durch eine tatsächlich zu große Spannkraft beschädigt zu werden.

Es hat sich als zweckmäßig erwiesen, wenn der Schwellenwert bei einer Abweichung von kleiner/gleich 2 % liegt, insbesondere bei einer Abweichung von 1,5 % und vorzugsweise bei einer Abweichung von 0,5 %.

Vorteilhaft ist es weiterhin, wenn ein Sensor zur Erfassung der Betätigungskraft vorhanden ist, dessen Messdaten kabelgebunden an die Kontrolleinheit übertragen werden kann. Bei diesem Verfahren stehen zwei getrennte Sensoren zur Verfügung, die an unterschiedlichen Stellen der Kraftübertragungskette die wirkende Kraft erfassen und über die Fusion zweier Sensordaten über redundante Übertragungswege eine deutliche Erhöhung der Sicherheit darstellen.

Für den Fall, dass die Spanneinrichtung durch ein Spannfutter gebildet ist, ist der Sensor zur Messung der Spannkraft Fᵣₑₐₗ vorzugsweise einer der Spannbacken zugeordnet.

Im Folgenden wird die Erfindung an einem in der Zeichnung dargestellten Ausführungsbeispiel näher erläutert; es zeigt:

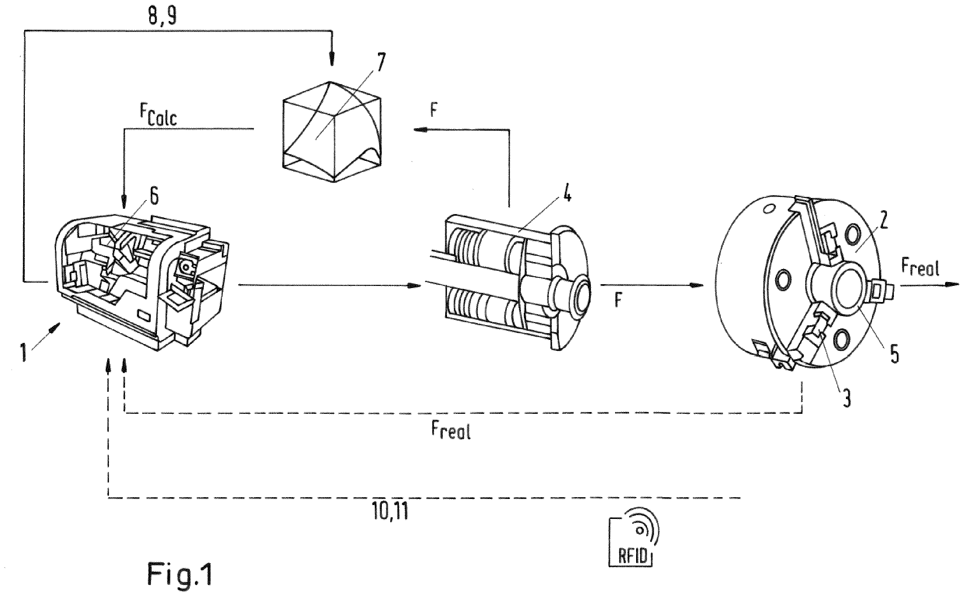

- Fig. 1: eine schematische Darstellung der Vorgänge zur Bestimmung der Spannkraft mit dem erforderlichen Sicherheitslevel.

In der Figur 1 ist eine Werkzeugmaschine 1 gezeigt, der als Spanneinrichtung ein Spannfutter zugeordnet ist, nämlich in dem gezeigten Ausführungsbeispiel ein Dreibacken-Spannfutter mit drei gleichmäßig über den Umfang angeordneten, radial zur Futterachse verstellbaren Spannbacken 3, deren Verstellung bei dem gezeigten Ausführungsbeispiel über einen elektrischen Antrieb 4 erfolgt, durch den eine Betätigungskraft F bereitgestellt wird. Diese Betätigungskraft wird über mechanische Umsetzung in der Kraftübertragungskette in eine Spannkraft umgewandelt, die von den Spannbacken 3 auf das Werkstück 5, in dem gezeigten Ausführungsbeispiel eine in Außenspannung gehaltene Hülse, ausgeübt wird. Die aus der Betätigungskraft F herrührende Spannkraft ist weiterhin beeinflusst durch die Zentrifugalkraft während der rotatorischen Betätigung der Spanneinrichtung, durch die Gestaltung und Qualität der Funktionsflächen der Spannbacken 3 sowie deren Verschleiß und Schmierzustand. Aus der Betätigungskraft F erfolgt dann eine modellbasierte Berechnung der anhand der Betätigungskraft F und der Betriebsparameter der Werkzeugmaschine 1 erwartbaren Spannkraft F_{calc} in einer Kontrolleinheit 6 der Werkzeugmaschine 1. Darüber hinaus erfolgt eine getaktete Messung der in der Spanneinrichtung auf den Gegenstand wirkenden Spannkraft Fᵣₑₐₗ im zeitlichen Abstand eines Messintervalls und die drahtlose Übertragung des Messwertes Fᵣₑₐₗ an die Kontrolleinheit 6 der Werkzeugmaschine 1, in der ein Vergleich des Messwertes Fᵣₑₐₗ mit der berechneten Spannkraft F_{calc} erfolgt.

Es erfolgt ein Anpassen des Messintervalls, wenn der Vergleich eine Abweichung ergibt, die einen Schwellenwert erreicht, wobei das Messintervall verlängert wird, wenn der Schwellenwert unterschritten wird und das Messintervall verkürzt wird, wenn der Schwellenwert überschritten wird, so dass das Funksignal zur drahtlose Übertragung des Messwertes Fᵣₑₐₗ bei einer guten Übereinstimmung seltener übertragen werden muss, wodurch sich die Lebensdauer des in die Spannbacke 3 integrierten Akkumulators zur Bereitstellung der erforderlichen elektrischen Energie deutlich verlängert. In den Sendepausen zwischen der Übertragung der Messwerte Fᵣₑₐₗ wird die Spannkraft nach einem Modell 7 berechnet anhand der Betätigungskraft F und zusätzlicher Messgrößen wie der Drehzahl 8 der Maschinenspindel, der Masse 10 der Backen, der kumulierten Zyklenzahl 11 und weiterer maßgeblicher Parameter 9 wie Verschleiß und Schmierzustand.

Es ist darauf hinzuweisen, dass der Schwellenwert für eine Abweichung mit einem kleineren Fᵣₑₐₗ als F_{calc} nicht identisch zu dem Schwellwert für eine Abweichung mit einem größeren Fᵣₑₐₗ als F_{calc} sein muss und insbesondere kleiner gewählt sein kann. Berücksichtigt werden kann auch die Verformungsempfindlichkeit des einzuspannen bzw. eingespannten Werkstücks 5 bei der Festlegung des Schwellenwertes. Schließlich ist darauf hinzuweisen, dass die Betätigungskraft F nicht nur aus der erzeugten Betätigungskraft abgeleitet werden kann, sondern auch mittels eines Sensors kontrollierbar ist, dessen Messdaten kabelgebunden an die Kontrolleinheit 6 übertragen werden. Es stehen damit zwei unterschiedliche Sensoren zur Verfügung, die auf unterschiedlichen Pfaden ihre Messdaten an die Kontrolleinheit 6 übermitteln zur redundanten Kontrolle des Spannzustandes.

### Bezugszeichenliste

- 1: Werkzeugmaschine
- 2: Spannfutter
- 3: Spannbacke
- 4: Antrieb
- 5: Werkstück
- 6: Kontrolleinheit
- 7: Modell
- 8: Drehzahl
- 9: weitere Parameter
- 10: Masse der Backen
- 11: Zyklenzahl
- F: Betätigungskraft
- F_{calc}: erwartbare Spannkraft
- Fᵣₑₐₗ: gemessene Spannkraft

## Patentansprüche

1. Verfahren zur Bestimmung der Spannkraft einer kraftbetätigten, rotatorisch antreibbaren Spanneinrichtung (2) einer Werkzeugmaschine (1), umfassend die Schritte
• Einspannen eines Gegenstandes (5) mit einer Betätigungskraft F,
• Modellbasierte Berechnung der anhand der Betätigungskraft F und der Betriebsparameter der Werkzeugmaschine (1) erwartbaren Spannkraft F_{calc} in einer Kontrolleinheit (6) der Werkzeugmaschine (1),
• getaktete Messung der in der Spanneinrichtung (2) auf den Gegenstand (5) wirkenden Spannkraft Fᵣₑₐₗ im zeitlichen Abstand eines Messintervalls I,
• drahtlose Übertragung des Messwertes Fᵣₑₐₗ an die Kontrolleinheit (6) der Werkzeugmaschine (1) und Vergleich des Messwertes Fᵣₑₐₗ mit der berechneten Spannkraft F_{calc}, **gekennzeichnet, durch**
• Anpassen des Messintervalls, wenn der Vergleich eine Abweichung ergibt, die einen Schwellenwert erreicht.

2. Verfahren nach Anspruch 1, **dadurch gekennzeichnet, dass** das Messintervall verlängert wird, wenn der Schwellenwert unterschritten wird und/oder dass das Messintervall verkürzt wird, wenn der Schwellenwert überschritten wird.

3. Verfahren nach Anspruch 1 oder 2, **dadurch gekennzeichnet, dass** die Größe der Änderung des Messintervalls proportional zum Abstand des Messwertes Fᵣₑₐₗ vom Schwellenwert ist.

4. Verfahren nach einem der Ansprüche 1 bis 3, **dadurch gekennzeichnet, dass** der Schwellenwert für eine Abweichung mit einem kleineren Fᵣₑₐₗ als F_{calc} kleiner/gleich dem Schwellenwert für eine Abweichung mit einem größeren Fᵣₑₐₗ als F_{calc} ist.

5. Verfahren nach einem der Ansprüche 1 bis 4, **dadurch gekennzeichnet, dass** die Verformungsempfindlichkeit des einzuspannenden Gegenstandes (5) bei der Festlegung des Schwellenwertes für eine Abweichung mit einem größeren Freai als F_{calc} berücksichtigt wird.

6. Verfahren nach einem der Ansprüche 1 bis 5, **dadurch gekennzeichnet, dass** der Schwellenwert bei einer Abweichung von ≤ 2 % liegt, insbesondere bei einer Abweichung von 1, 5 % und vorzugsweise bei einer Abweichung von 0,5 %.

7. Verfahren nach einem der Ansprüche 1 bis 6, **dadurch gekennzeichnet, dass** ein Sensor zur Erfassung der Betätigungskraft F vorhanden ist, dessen Messdaten kabelgebunden an die Kontrolleinheit (6) übertragen werden.

8. Verfahren nach einem der Ansprüche 1 bis 6, **dadurch gekennzeichnet, dass** die Spanneinrichtung (2) durch ein Spannfutter gebildet und der Sensor zur Messung der Spannkraft Fᵣₑₐₗ einer der Spannbacken (3) zugeordnet ist.

## Claims

1. A method for determining a clamping force of a force-actuated, rotationally drivable clamping device (2) of a machine tool (1), the method comprising:
• clamping an object (5) with an actuation force F;
• model-based calculating the clamping force F_{calc} to be expected based an the actuation force F and operating parameters of the machine tool (1) in a control unit (6) of the machine tool (1);
• clocked measuring the clamping force Fᵣₑₐₗ acting upon the object (5) in the clamping device (2) within a time span of a measurement interval;
• wirelessly transmitting the measured value Fᵣₑₐₗ to the control unit (6) of the machine tool (1) and comparing the measured value Fᵣₑₐₗ with a calculated clamping force F_{calc}; **characterized by**
• adapting the measurement interval if the comparison reveals a deviation which reaches a threshold value.

2. The method according to claim 1, wherein the measurement interval is lengthened if the threshold value is not reached, and/or the measurement interface is shortened if the threshold value is exceeded.

3. The method according to claim 1 or 2, wherein a size of the change of the measurement interval is proportionate to a distance of the measured value Fᵣₑₐₗ from the threshold value.

4. The method according to any claim 1 to 3, wherein the threshold value for a deviation where the measured value Fᵣₑₐₗ is less than the calcluated clamping force F_{calc} is less than/equal to the threshold value for a deviation where the measured value is greater than calculated ciamping force F_{calc}.

5. The method according to any claim 1 to 4, wherein the deformation sensitivity of the object (5) to be clamped is taken into account in the definition of the threshold value for a deviation where measured value Fᵣₑₐₗ is greater than calculated clamping force F_{calc}.

6. The method according to any claim 1 to 5, wherein the threshold value lies at a deviation of less than/equal to 2%, in particular a deviation of 1.5% and preferably a deviation of 0.5%.

7. The method according to any claim 1 to 6, wherein a sensor is present for detecting the actuation force F, whose measured data is transmitted in a wirebound manner to the control unit (6).

8. The method according to any claim 1 to 6, wherein the clamping device (2) is formed by a chuck, and the sensor for measuring the ciamping force Fᵣₑₐₗ is assigned to one of the clamping jaws (3).

## Revendications

1. Procédé de détermination de la force de serrage d'un dispositif de serrage (2) actionné par force, entraînable de manière rotative d'une machine-outil (1), comprenant les étapes
- le serrage d'un objet (5) avec une force d'actionnement F,
- le calcul basé sur un modèle de la force de serrage F_{calc} pouvant être attendue au moyen de la force d'actionnement F et des paramètres de fonctionnement de la machine-outil (1) dans une unité de contrôle (6) de la machine-outil (1),
- la mesure cadencée de la force de serrage Fᵣₑₐₗ agissant dans le dispositif de serrage (2) sur l'objet (5) dans la durée temporelle d'un intervalle de mesure I,
- la transmission sans fil de la valeur de mesure Fᵣₑₐₗ à l'unité de contrôle (6) de la machine-outil (1) et la comparaison de la valeur de mesure Fᵣₑₐₗ avec la force de serrage F_{calc} calculée, **caractérisé par**
- l'adaptation de l'intervalle de mesure lorsque la comparaison produit un écart qui atteint une valeur seuil.

2. Procédé selon la revendication 1, **caractérisé en ce que** l'intervalle de mesure est prolongé lorsque la valeur seuil n'est pas atteinte et/ou que l'intervalle de mesure est raccourci lorsque la valeur seuil est dépassée.

3. Procédé selon la revendication 1 ou 2, **caractérisé en ce que** la grandeur de la modification de l'intervalle de mesure est proportionnelle à la distance de la valeur de mesure Fᵣₑₐₗ par rapport à la valeur seuil.

4. Procédé selon l'une quelconque des revendications 1 à 3, **caractérisé en ce que** la valeur seuil pour un écart avec une Fᵣₑₐₗ inférieure à F_{calc} est inférieure/égale à la valeur seuil pour un écart avec une Fᵣₑₐₗ supérieure à F_{calc}.

5. Procédé selon l'une quelconque des revendications 1 à 4, **caractérisé en ce que** la sensibilité à la déformation de l'objet (5) à serrer est prise en considération lors de la fixation de la valeur seuil pour un écart avec une Fᵣₑₐₗ supérieure à F_{calc}.

6. Procédé selon l'une quelconque des revendications 1 à 5, **caractérisé en ce que** la valeur seuil est égale à un écart de ≤ 2 %, en particulier un écart de 1,5 % et de préférence un écart de 0,5 %.

7. Procédé selon l'une quelconque des revendications 1 à 6, **caractérisé en ce qu'**un capteur de détection de la force d'actionnement F est présent, dont les données de mesure sont transmises par câble à l'unité de contrôle (6).

8. Procédé selon l'une quelconque des revendications 1 à 6, **caractérisé en ce que** le dispositif de serrage (2) est formé par un mandrin de serrage et le capteur de mesure de la force de serrage Fᵣₑₐₗ est associé à une des mâchoires de serrage (3).
